# EUROPEAN PATENT APPLICATION

(11) **EP 4 273 298 A1**
(43) Date of publication of application: **08.11.2023**
(21) Application number: 22171499.1
(22) Date of filing: 04.05.2022
(51) Int. Cl.: C25B 1/04, B01D 53/04, B01D 53/047, B01D 53/22, B01D 53/32, C01B 3/24, C25B 9/70, C25B 15/00, C25B 15/08

(54) **METHOD FOR THE START-UP OF AN ELECTROLYSIS SYSTEM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Combes, Gary, 60439 Frankfurt am Main (DE)
(74) Representative: Stang, Stefan

(57) **Abstract**

The invention related to a method for the start-up of an electrolysis system, wherein the electrolysis system is configured to produce hydrogen at the cathode side of the electrolysis system from a water containing electrolysis medium. According to the method, at least part of the electrolysis system is purged with an inert gas during stand-by. The inert gas is displaced from the cathode side of the electrolysis system by means of the hydrogen stream produced during start-up. The resulting mixed stream, which comprises at least hydrogen and inert gas, is supplied to a hydrogen separation unit until a predetermined upper concentration limit of inert gas in the mixed stream is reached. After the predetermined upper concentration limit of inert gas in the mixed stream, now low in inert gas, has been reached, the mixed stream is withdrawn from the electrolysis system by bypassing the hydrogen separation unit.

## Description

### Technical field

The invention relates to a method for the start-up of an electrolysis system, in particular for the start-up of an electrolysis system for the production of hydrogen on an industrial scale.

### Background art

Electrolysis systems which operate of renewable power may have to shut down frequently with loss of wind or solar power. A solar plant, for instance, offers 8 to 10 hours of 100 % load sun. A wind farm may curtail power output by up to 80 %. Hence, at least part of the electrolysis cell stacks of an electrolysis system have to be turned off for longer periods.

Such long periods of shutdown may extend beyond the safe window of operation of the electrolysis system in standby mode. In particular, longer shutdown periods may result in high levels of hydrogen migrating into the oxygen side (anode side) of the electrolysis cell stack and potentially exceed the upper explosion limit (UEL) levels for hydrogen. Or vice versa, the oxygen may migrate to the hydrogen side (cathode side) of an electrolysis cell stack.

The result is that at least the electrolysis cell stacks have to be purged with an inert gas, for example with nitrogen. The purge may also extend to the gas-liquid separators. After start-up of the electrolysis system, it may take several hours and a larger number of purge cycles to reduce the content of inert gas from initially 100 % to a lower level that meets the specification of the produced hydrogen to be fed into the system. Such a level may be for instance less than 2000 ppmV of inert gas or less. If the hydrogen produced is to be used as a fuel, there may be a requirement that the hydrogen contains less than 100 ppmV of inert gas.

The hydrogen produced by the electrolysis system which displaces the inert gas during purging is vented. So the more often a particular electrolysis cell stack has to be shut down and operated in stand-by mode, the more of the produced hydrogen during the start-up phase is vented and therefore wasted.

Hence, if a plurality of electrolysis systems, i.e. a plurality of cell stack units is present in an electrolysis plant, it is avoided to shut down more than one of those cell stack units. Because the higher the number of cell stack units operated in stand-by mode, the more hydrogen has to be wasted. For instance, an electrolysis plant comprises three cell stack units A, B and C. The plant goes to one third of its maximum nominal capacity for 12 hours, due to low power output of the power supplying wind farm during this period. To turn off only one of the cell stack units, units A and B are left on at 50 % of their maximum nominal capacity, and unit C is switched off. Unit C is purged with nitrogen during 4 hours stand-by time. Then, unit A is switched off for 4 hours, purged with Nitrogen and unit C is started up again. During the start-up phase of unit C, the hydrogen displacing the nitrogen is vented. As several purge cycles and optionally (re-)pressurisation cycles are required to achieve a hydrogen gas purity that is in specification for downstream use, the amount of hydrogen wasted is significant. But not only that significant amounts of hydrogen are wasted due to such a cycling regime, but also constant turning off and on of the electrolyser cell stack units leads to faster cell stack degradation.

### Disclosure of the invention

It is a general object of the present invention to provide a method which at least in part overcomes the problems of the prior art.

In particular, it is a general object of the present invention to provide a method which avoids venting and waste of hydrogen during the start-up phase of an electrolysis system.

It is a further object of the present invention to provide a method which lowers the degradation of cell stacks of an electrolysis system during start-up after longer operation in standby mode.

A contribution to the at least partial solution of at least one of the above mentioned objects is provided by the subject-matter of the independent claim. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems is at least partially solved by a method for the start-up of an electrolysis system, wherein the electrolysis system is configured to produce hydrogen at the cathode side of the electrolysis system from a water containing electrolysis medium, comprising the method steps of
a) purging at least a part of the electrolysis system with an inert gas stream whilst the electrolysis system is in standby mode;
b) displacement of the inert gas from the cathode side of the electrolysis system by means of a hydrogen stream during the start-up of the electrolysis system, whereby said hydrogen stream is produced on the cathode side of the electrolysis system;
c) supplying a mixed stream comprising hydrogen and inert gas obtained in step b) to a hydrogen separation unit until a predetermined upper concentration limit of inert gas in the mixed stream comprising hydrogen and inert gas supplied to the hydrogen separation unit is reached;
d) withdrawing a hydrogen stream low in inert gas from the electrolysis system by bypassing the hydrogen separation unit after the predetermined upper concentration limit according to step c) has been reached.

The method steps a) to d) are preferably carried out in the order given.

The electrolysis system of the method according to the invention at least comprises an electrolyser comprising an electrolysis cell stack with an anode section and a cathode section. The electrolysis system may be part of an electrolysis plant comprising a plurality of electrolysis systems, each of the electrolysis systems comprising an electrolysis cell stack with an anode section and a cathode section.

In the cathode section of the electrolysis system, hydrogen is produced from a water containing electrolysis medium. In the anode section of the electrolysis system, preferably oxygen is produced from a water containing electrolysis medium. The water containing electrolysis medium may comprise pure water or an alkaline electrolysis medium or any other suitable electrolysis medium, dependent on which kind of electrolysis technology is applied. The electrolysis system may comprise a proton exchange membrane (PEM) electrolyser and/or an alkaline electrolyser.

The electrolysis system may further comprise at least one gas-liquid separator for the separation of hydrogen product gas and/or oxygen product gas from the electrolysis medium.

In general, the electrolysis system comprises a direct current source, by which direct current is supplied to the respective electrolysis cell stacks. For example, the direct current is supplied by a rectifier. The electrical current is in particular supplied by a renewable energy source, in particular a solar plant or a wind farm. In particular, the electrolysis system is supplied with electrical current of an electrical current source with fluctuating electric current.

According to step a) of the method, at least a part of the electrolysis system is purged with an inert gas stream whilst the electrolysis system is in standby mode.

The inert gas stream may comprise or consists of nitrogen as the inert gas or any other suitable inert gas. The electrolysis system or a part of the electrolysis system is purged or flushed with the inert gas. In particular, at least the electrolysis cell stack(s) of the electrolyser of the electrolysis system is/are purged with the inert gas. In particular, at least the electrolysis cell stack(s) of the cathode side of the electrolyser of the electrolysis system is/are purged with the inert gas. According to one further embodiment, also the gas-liquid separator(s) of the electrolysis system is/are purged with inert gas during operation of the electrolysis system in standby mode. In particular, also the gas-liquid separator(s) of the cathode side of the electrolysis system is/are purged with inert gas during operation of the electrolysis system in standby mode.

"Purging with an inert gas stream" means that the electrolysis system is either continuously purged with a stream of inert gas, or that the inert gas is locked in the system, i.e. is kept within the electrolysis system. In either case, the electrolysis system continues to remain under an inert gas atmosphere during the purging step a).

The term "standby" mode comprises a hot standby mode and/or cold standby mode. In particular, the standby mode comprises a hot standby mode which is followed by a cold standby mode. In hot standby mode, the electrolysis system remains at least in part under hydrogen atmosphere, potentially under a pressure of more than 1 barg. Cold standby refers to a status whereby the electrolysis unit is or has been purged with the inert gas to obtain a safe operating level of residual hydrogen in the system. According to an example, a safe operating level of residual hydrogen is considered when the hydrogen concentration in the gas mixture is lower than 2 % per volume.

In standby mode, the electrolyser system may still consume electrical power. In an example, the power consumption for maintaining hot standby may be 0,5 to 5 % of the nominal electrical power of the electrolysis system. Also if no power from a renewable energy source is available, the electrolysis system may remain in a hot standby mode for one hour or even longer. The electrolysis system does not produce hydrogen and does not consume electrical power or only negligible amounts when it is operated in cold standby mode.

According to one embodiment, the purging of at least a part of the electrolysis system with an inert gas stream whilst the electrolysis system is in standby mode occurs at low pressure. That is, the purging occurs at a pressure that is below the nominal pressure at which the electrolysis system is operated. For example and depending on the type of the electrolysis system, "low pressure" means a pressure that is lower than 5 barg, or lower than 3 barg, or lower than 1 barg, or a pressure which is close to atmospheric pressure.

According to step b) of the method, the inert gas is displaced by means of a hydrogen stream on the cathode side of the electrolysis system. The hydrogen stream is produced during the start-up of the electrolysis system, in particular when current is applied at a minimum level to initiate the electrolysis reaction. Hence, the start-up of the electrolysis system occurs in the course of step b), and the electrolysis system begins to produce hydrogen again during the start-up phase. According to one embodiment, the displacement of the inert gas on the anode side of the electrolysis system is effected by an oxygen stream, whereby said oxygen stream is produced on the anode side of the electrolysis system.

According to one embodiment, displacement of the inert gas from the cathode side of the electrolysis system by means of a hydrogen stream during the start-up of the electrolysis system occurs at nominal pressure of the electrolysis system. That is, the electrolysis system is (re-)pressurized and displacement of the inert gas by means of the hydrogen stream occurs at a pressure at which the electrolysis system is actually operated. In particular, the displacement of the inert gas by means of the hydrogen stream occurs at least temporarily at a pressure at which the electrolysis system is actually operated. According to an example, the nominal pressure at which the electrolysis system is operated is a pressure of 6 barg to 40 barg. For instance, alkaline electrolysis systems operate at a nominal pressure of 6 barg to 15 barg, preferably of 10 barg to 12 barg. PEM based electrolysis systems often operate at higher nominal pressures of up to 40 barg.

According to step c) of the method, the mixed stream of hydrogen and inert gas obtained in step b) is supplied to a hydrogen separation unit. In the hydrogen separation unit, hydrogen is separated from further components of the mixed stream. Further components are at least the inert gas, in particular nitrogen, and further undesirable impurities. In the hydrogen separation unit, hydrogen is recovered from the mixed stream. The mixed stream is supplied to the hydrogen separation unit, until a predetermined upper concentration limit of inert gas in the mixed stream as it is supplied to the hydrogen separation unit is reached. According to an example, the predetermined upper concentration limit is 2000 ppmV of Nitrogen, or 200 ppmV of Nitrogen, or lower. This concentration limit is predetermined according to a specification of the hydrogen product produced by the electrolysis system. Alternatively, the mixed stream is supplied to the hydrogen separation unit, until a value lower than the predetermined upper concentration limit of inert gas in the mixed stream as it is supplied to the hydrogen separation unit is reached. For instance, if the upper concentration limit is 200 ppmV of Nitrogen, the mixed stream is supplied to the hydrogen separation unit until a concentration of 100 ppmV of Nitrogen in the mixed stream is reached.

The predetermined upper concentration limit of inert gas in the mixed stream comprising hydrogen and inert gas is reached by means of the hydrogen stream produced on the cathode side displacing the inert gas used for purging the electrolysis system, in particular the cathode side of the electrolysis system. That is, in the course of this displacement, the inert gas concentration in the mixed stream decreases, whilst the hydrogen gas concentration in the mixed stream increases. This is done at least until the inert gas concentration is so low, that its predetermined upper concentration limit is reached, or is lower. In an example, that predetermined upper concentration limit is the highest allowable concentration of inert gas in the mixed stream according to a predetermined specification, or a concentration lower than that.

The hydrogen separation unit affords a hydrogen rich stream, in particular a pure hydrogen stream, preferably with a hydrogen content of more than 95 % per volume hydrogen, more preferably with a hydrogen content of more than 99 % per volume hydrogen. Furthermore, the hydrogen separation unit afford a tail gas stream. The tail gas stream at least contains the inert gas, in particular nitrogen.

According to an embodiment, the mixed stream comprising hydrogen and inert gas obtained in step b) is supplied at pressure to the hydrogen separation unit until a predetermined upper concentration limit of inert gas in the mixed stream comprising hydrogen and inert gas supplied to the hydrogen separation unit is reached. That is, the mixed stream is supplied to the hydrogen separation unit at a pressure that corresponds to the nominal system pressure of the electrolysis system or a corresponding lower pressure due to unavoidable pressure losses.

According to step d) of the method, a hydrogen stream low in inert gas is withdrawn from the electrolysis system by bypassing the hydrogen separation unit after the predetermined upper concentration limit according to step c) of the method has been reached. The hydrogen separation unit can be bypassed as soon as the concentration of the inert gas is low enough according to the predetermined specification of the hydrogen product, so that it is no longer necessary to separate hydrogen from inert gas in the mixed stream. The term "stream low in inert gas" refers to a stream, in which the predetermined upper concentration limit of the inert gas has been reached or is lower.

The hydrogen product is then put to further use, for example it is fed into a pipeline.

According to the method of the invention, no hydrogen is wasted in the course of the start-up process. The whole amount of hydrogen used to displace inert gas from the cathode side of the electrolysis system is recovered in the hydrogen separation unit. Hence, it is also possible, in case that an electrolysis plant comprises a plurality of electrolysis systems, to switch off a higher number of electrolysis systems and operate the other ones at higher capacities when the plant is operated at low overall capacity. As no hydrogen will be wasted during start-up of the particular electrolysis systems, it can be justified to operate a higher number of those systems in stand-by mode during operation of the plant at low overall capacity.

According to one embodiment of the method, the hydrogen separation unit is supplied with a hydrogen rich stream, wherein said hydrogen rich stream is produced by a hydrogen production unit which is not an electrolysis system.

Advantageously, an already existing hydrogen separation unit is used to remove the inert gas from the mixed stream. This allows synergy effects to be exploited in terms of capital expenditures. In particular, the hydrogen separation unit is supplied with a hydrogen rich stream, which is not the mixed stream withdrawn from the electrolysis system, and which is produced by a hydrogen production unit which is not an electrolysis system. In one embodiment, the hydrogen production unit is a steam methane reforming unit (SMR), an partial oxidation unit (POx), an autothermal reforming unit (ATR), a gas heated reforming unit (GHR), or a combination of the aforementioned. Preferably, the hydrogen production unit is a steam methane reforming unit, in particular a steam methane reforming unit comprising a water-gas shift (WGS) reactor.

In steam methane reforming units which are configured for producing hydrogen the produced synthesis gas (mixture of hydrogen, carbon monoxide and carbon dioxide) is shifted to higher hydrogen levels by means of the water-gas shift reaction. The resulting hydrogen-rich stream is, after removal of carbon dioxide, subject to further purification by hydrogen separation units such as pressure swing adsorption units. It is therefore preferred that the hydrogen production unit is a steam methane reforming unit, in particular comprising a water-gas shift unit.

According to one embodiment of the method, the hydrogen production unit which is not an electrolysis system and the electrolysis system are located in a joint plant network.

The aforementioned synergies are particularly effective if both hydrogen-generating units, the electrolysis system and the hydrogen production unit which is not an electrolysis system, are located in a joint or same plant network.

According to one embodiment of the method, the hydrogen separation unit is selected from at least one element of the group of
- a pressure swing adsorption (PSA) unit,
- a thermal swing adsorption (TSA) unit,
- a membrane unit,
- an electrochemical pump.

According to this embodiment, the mixed stream comprising hydrogen and inert gas obtained in step b) is supplied to a pressure swing adsorption (PSA) unit, a thermal swing adsorption (TSA) unit, a membrane unit, an electrochemical pump, or to a combination of the aforementioned according to step c). Preferably, the hydrogen separation unit is a pressure swing adsorption (PSA) unit, i.e. the mixed stream comprising hydrogen and inert gas obtained in step b) is supplied to a pressure swing adsorption (PSA) unit according to step c). This embodiment is particularly preferred in case the electrolysis system is operated in combination with a steam methane reforming (SMR) plant.

In case of low flow rates of the mixed stream comprising hydrogen and inert gas, an electrochemical pump may be preferred.

According to one embodiment of the method, the hydrogen separation unit produces a high purity hydrogen stream and an off-gas stream by separation of hydrogen from
- the mixed stream comprising hydrogen and inert gas supplied by the electrolysis system, and
- the hydrogen rich stream supplied by the hydrogen production unit which is not an electrolysis system.

The mixed stream comprising hydrogen and inert gas and the hydrogen rich stream are preferably mixed and then supplied to the hydrogen separation unit. The hydrogen separation unit produces a high purity hydrogen stream from the stream comprising the mixed stream comprising hydrogen and inert gas mixed with the hydrogen rich stream. At the same time, the hydrogen separation unit produces an off-gas from the aforementioned mixed streams.

According to one embodiment of the method, the mixed stream comprising hydrogen and inert gas is supplied to a purification unit to remove oxygen and optionally water from said mixed stream, whereby a purified mixed stream comprising hydrogen and inert gas is obtained, and said purified mixed stream is subsequently supplied to the hydrogen separation unit.

By removing oxygen and optionally water from the mixed stream comprising hydrogen and inert gas, the resulting purified mixed stream results in a high purity hydrogen product once the purified mixed stream passed the hydrogen separation unit.

Further preferred, the mixed stream comprising hydrogen and inert gas is purified in two steps. First, oxygen contained in the mixed stream (due to membrane crossover or mixing of catholyte and anolyte) reacts with hydrogen in a catalyst bed to form water. Second the water thereby formed and water potentially entrained from the gas-liquid separator is removed in a dryer bed, for example by means of molecular sieves.

According to one embodiment of the method, an off-gas stream from the purification unit is combined with an off-gas stream from the hydrogen separation unit.

The combined flow from off-gases can be further recycled if combustible gases or otherwise recyclable gases are contained in it.

According to one embodiment of the method, the concentration of inert gas in the mixed stream comprising hydrogen and inert gas is determined by an online-analyser, whereby the sampling point of the online analyser is located downstream of the purification unit and upstream of the hydrogen separation unit.

In general, the sampling point of the online analyser is located downstream of the electrolysis system and upstream of the hydrogen separation unit. That is, the concentration of inert gas in the mixed stream comprising hydrogen and inert gas has to be determined before the mixed stream enters the hydrogen separation unit. Preferably, the sampling point of the online analyser is located downstream of the purification unit, as the mixed stream is then free of oxygen and preferably water and determining the inert gas concentration is hence facilitated.

According to one embodiment of the method, the electrolysis system is part of an electrolysis plant comprising at least three electrolysis systems, and wherein, in a condition in which the electrolysis plant is not operating at its maximum specified capacity, a first and a second of the electrolysis systems are operated in standby mode, and a third of the electrolysis systems is operated at a capacity which, expressed as a percentage of the maximum nominal capacity of the third electrolysis system, is at least equal to the lower safety limit of the third electrolysis system. According to the method of the invention, hydrogen used to displace inert gas from the cathode section of the electrolysis system during start-up is not vented, but recovered by separation in a hydrogen separation unit, such as a pressure swing adsorption unit. In a scenario in which an electrolysis plant comprises three electrolysis systems, with each electrolysis systems comprising an electrolysis cell stack, it is possible to operate two of the electrolysis systems in standby mode and one in operation at full or reduced capacity when the whole plant is operated at a reduced nominal capacity. However, under normal circumstances, when the hydrogen is vented, only one of the electrolysis systems will be switched off and the other two will be operated at reduced capacity. According to the aforementioned embodiment, advantage of the method according to the invention is exploited in a way that a larger number of electrolysis systems can be operated in stand-by mode at the same time, as no hydrogen will be wasted during the subsequent start-up of the respective electrolysis systems.

The electrolysis plant may comprise more than three electrolysis systems, for example four electrolysis systems. In those cases, it is possible to operate the first and second electrolysis system in stand-by mode and operate the third and fourth at full or reduced capacity or to operate the first, second and fourth electrolysis system in stand-by mode and operate the third at full or reduced capacity. This concept can be extended with the necessary adaptations to electrolysis plant with five or more electrolysis systems.

In any case, the electrolysis system which is kept in operation will be operated at a capacity which, expressed as a percentage of the maximum nominal capacity of this electrolysis system, is at least equal to the lower safety limit of this electrolysis system. It is not possible to operate an electrolysis systems at an arbitrarily low capacity for longer time, since the migration of hydrogen to the anode side and, conversely, oxygen to the cathode side becomes too high when the current density falls below a certain level.

According to one embodiment of the method, the electrolysis system is part of an electrolysis plant comprising a further electrolysis system, wherein the further electrolysis system provides a hydrogen stream, and said hydrogen stream is admixed to the mixed stream comprising hydrogen and inert gas, whereby a hydrogen rich mixed stream is obtained, and the hydrogen rich mixed stream is supplied to the hydrogen separation unit until a predetermined upper concentration limit of inert gas in the hydrogen rich mixed stream is reached.

According to this embodiment and according to step c) of the method, a hydrogen rich mixed stream comprising hydrogen and inert gas obtained in step b) and by admixing hydrogen from the further electrolysis system to the mixed stream is supplied to the hydrogen separation unit until a predetermined upper concentration limit of inert gas in the hydrogen rich mixed stream is reached. That is, the "hydrogen rich mixed stream" differs from the "mixed stream" by the fact that hydrogen from a further electrolysis system is admixed to the mixed stream to afford a hydrogen rich mixed stream.

Depending on the size of the hydrogen separation unit, under certain conditions it may be necessary to introduce the mixed stream to the hydrogen separation unit at a minimum hydrogen concentration.

For example, due to its size, a dedicated hydrogen separation unit to the electrolysis process may need a minimum of 90% hydrogen in the mixed stream, with the consequence that it has to be vented until it can be supplied to the hydrogen separation unit. So in the instance of the very first electrolysis system being started, this may delay the introduction to the hydrogen separation unit until a concentration of 90 % per volume hydrogen in the mixed stream is reached, with this portion being vented. However, the subsequent units can benefit from the high purity hydrogen from the first system being combined in part with a further (or second) system. For example, system 1 at full rates delivers 99% pure hydrogen. If a minimum of 90% is required, then the second system combined with the first can introduce a mixed stream at a concentration of 81 % hydrogen (or 44% at 50% flow system 2 and 100% flow module 1), and the third system at 72%, once both system 2 (and 1 already) have achieved 99% purity. With a plant of 20 systems, this means for a plant designed to take 3 system flows, that subsequent start-ups benefit by reducing venting to only when hydrogen is at a minimum concentration of 72%, which for a pressurised system is actually lower than the partial pressure of hydrogen in nitrogen in the system at 10 bara when nitrogen is purged for standby and left at 1.5 bara pressure. Start-up and associated hydrogen losses are then reduced to <1 minute, down from 10-50min. The gas when it is fulfilling the specification with respect to e.g. nitrogen content is then routed to a deoxidation and dryer section if and as required.

A contribution to the at least partial solution of at least one of the aforementioned objects is further provided by a plant which is configured for carrying out any embodiment of the method according to the invention.

### Detailed description of exemplary embodiments

The invention will now be detailed by way of an exemplary embodiment with reference to the attached drawings. Unless otherwise stated, the drawing is not to scale. In the figure and the accompanying description, equivalent elements are each provided with the same reference marks.

In the drawings
- Figure 1: shows a simplified block flow diagram of a plant which is configured for carrying out the process according to the invention,
- Figure 2: shows a flow chart for carrying out the process according to the invention.

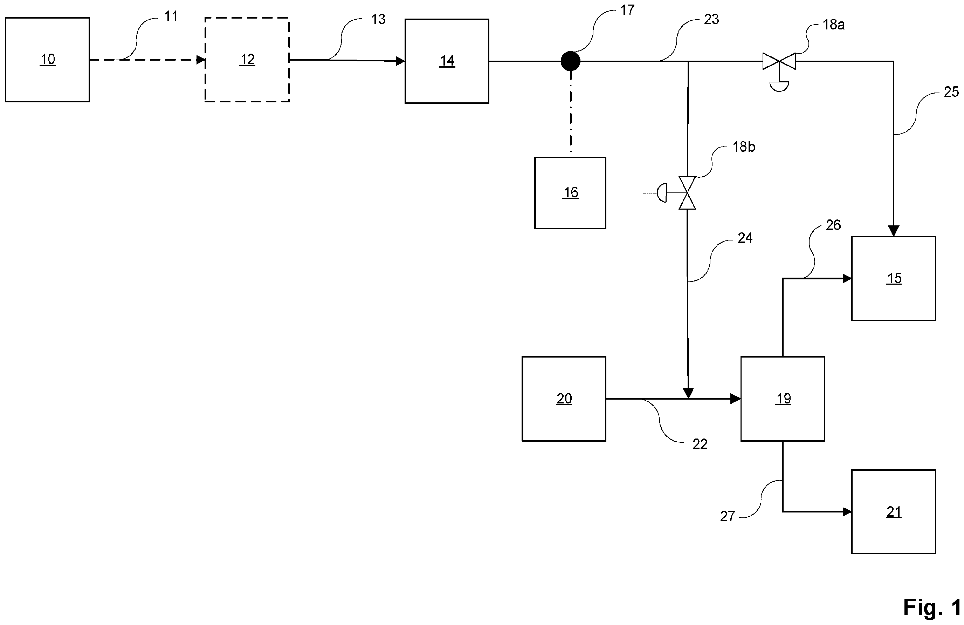

Figure 1 shows a simplified block flow diagram of one exemplary embodiment of a plant which is configured for carrying out the process according to the invention.

The plant according to Figure 1 comprises an electrolysis system 10. The electrolysis system 10 comprises a plurality of electrolysis cells, e.g. an electrolysis cell stack or a plurality of electrolysis cell stacks and is configured for the generation of hydrogen and oxygen from a water containing electrolysis medium. Hydrogen is produced on the cathode site of the electrode cell stack and oxygen on the anode side. The target product of the electrolysis system is hydrogen, which is produced on an industrial scale. Hence, the electrolysis system may have a total nominal power of 20 MW or more. The electrolysis system 10 may be of any suitable type, e.g. comprise a PEM electrolyser or an alkaline electrolyser. A hydrogen stream withdrawn from the electrolysis system 10 may be pressurized or not pressurized (i.e. be close to atmospheric pressure), dependent on the selected electrolyser type of the electrolyser system. The electrolysis system 10 is connected to a renewable energy source (not shown) such as a solar plant or a wind farm, which provides "green" electrical energy. The electric current provided by the renewable energy source is converted into direct current via a rectifier (not shown) and fed to the electrolyser of the electrolysis system 10.

During a stand-by of the electrolysis system 10, at least the electrode cell stacks are constantly flushed with nitrogen, so that an essentially pure nitrogen stream is withdrawn from the electrolysis system 10 during stand by. During the start-up phase, the cell stack of the electrolysis system 10 begins to produce hydrogen again so that the nitrogen in the electrolysis system is increasingly displaced by hydrogen over time. Hence, during start-up, a mixed stream comprising at least hydrogen and nitrogen is withdrawn from electrolysis system 10. In case that the mixed stream is not pressurized, it is withdrawn from electrolysis system 10 as an uncompressed mixed stream 11 and afterwards compressed in compression unit 12. Whether the mixed stream is pressurized or not depends on the configuration of the electrolysis system 10, i.e. whether it operated under elevated pressure or not.

The compressed mixed stream 13 is afterwards fed to a purification unit 14. Under usual circumstances, the hydrogen product stream of the cathode section of the electrolysis system 10 comprises small amounts of oxygen due to cell crossover. Furthermore, since water normally is not completely removed from the gas stream by gas-liquid separation and subsequent cooling of the gas stream, even small amounts of water are present in the gas stream. In purification unit 14, oxygen and water is removed from the pressurized mixed stream by catalytic conversion of oxygen to water and afterwards absorbing the water in a molecular sieve bed. The purification unit 14 produces an off-gas, which may be discharged from it (not shown). In the event that a temperature swing adsorption unit is used, losses of hydrogen product gas are negligible or close to zero.

Downstream of purification unit 14 is a sampling point 17 that allows an associated online analyser 16 to continuously determine, in real time, the composition of the mixed gas stream comprising hydrogen and nitrogen. In particular, the online analyser 16 determines the content of nitrogen in the mixed gas stream.

At the beginning of the start-up, the nitrogen content will be very high, for example, it can be up to 90 %. This nitrogen content decreases during the start-up process, which is registered accordingly by the online analyser 16. In this phase of the start-up process, it can be assumed that a previously defined maximum value for the nitrogen content in the mixed gas flow has not yet been reached. This predefined maximum value can be, for example, a concentration of 200 ppmV nitrogen in the mixed stream. The previously defined maximum value for the nitrogen content is the predetermined upper concentration limit of inert gas in the mixed stream according to the invention.

The online analyser 16 controls two control valves 18a and 18b. At the beginning of the start-up process of the electrolysis system 10, control valve 18a is closed and control valve 18b is open. As long as the content of nitrogen in the mixed stream is above the predetermined maximum hydrogen product specification value, the mixed stream is fed as purified compressed stream with high inert gas concentration 24 (nitrogen concentration above the maximum value) to a pressure swing adsorption unit 19.

The plant according to Figure 1 also has a steam reforming unit 20. In steam reforming unit 20, a hydrogen-rich stream 22 is produced from natural gas with a subsequent water-gas shift of the primarily produced synthesis gas, followed by a subsequent carbon dioxide separation. The hydrogen-rich stream 22 is also fed to the pressure swing adsorption unit 19 to separate hydrogen from the hydrogen-rich stream 22. In other words, the mixed stream 24 with (too) high a nitrogen content and the hydrogen-rich stream 22 from the steam reforming unit 20 are combined and fed to the pressure swing adsorption unit 19. The pressure swing adsorption unit 19 produces a high purity hydrogen stream 26 and an off-gas gas 27. The hydrogen stream 26 is further processed as a high purity hydrogen product 15, for example the high purity hydrogen product 15 is fed into a hydrogen pipeline. The off-gas stream 27 is subject to an off-gas treatment 21. The off-gas stream 27 may be combined with the off-gas stream withdrawn from the purification unit 14.

During the start-up process, the concentration of hydrogen in the mixed stream 23 increases continuously, while the nitrogen concentration decreases. As soon as the online analyser registers that the predetermined permitted upper limit for the nitrogen concentration (e.g. 200 ppmV Nitrogen) or a value lower than the upper limit has been reached, the control valve 18b closes and the control valve 18a is opened. From this point on, it is no longer necessary to feed the mixed stream 23 to the pressure swing adsorption unit 19. Hence, the hydrogen stream low in inert gas then bypasses the pressure swing adsorption unit 19. The corresponding hydrogen stream low in inert gas, designated as purified compressed mixed stream with low inert gas concentration 25, has a composition that essentially corresponds to the composition of the high purity hydrogen stream 26. That is, the composition of stream 25 in terms of hydrogen content and impurities is as good or better as the composition of stream 26. The resulting high purity hydrogen product 15 is fed into a hydrogen pipeline, for instance.

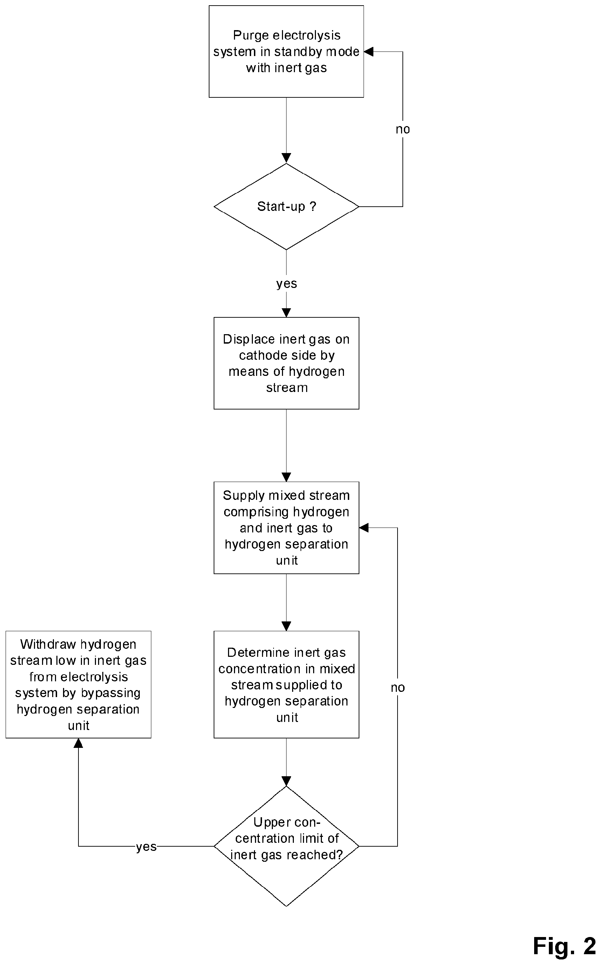

Figure 2 shows a flow chart for carrying out the process according to the invention. In stand-by mode, at least a part of the electrolysis system is purged with an inert gas. In particular, the electrolysis cell stacks are purged with nitrogen. For example, the purge is efficient to remove hydrogen to a level below 2 % per volume, which is safely under the lower explosion limit (LEL) in absence of air. In case the system continues to be purged, it is left under nitrogen with purge being a continuous action. In other words, the system continues to remain under a predominant nitrogen atmosphere. As soon as sufficient electrical energy is available from a renewable energy source, the decision is made to restart the electrolysis system, otherwise it continues to be purged with nitrogen. Purging with nitrogen means that the electrolysis system is either purged with a stream of Nitrogen as continuous purge, or the Nitrogen is locked in. In either case, the electrolysis system remains under a nitrogen atmosphere.

When the decision is made to restart the electrolysis system, the nitrogen in the system is continuously displaced by hydrogen produced on the cathode side of the electrolysis system. The resulting mixed stream, which contains at least hydrogen and nitrogen, is fed to a hydrogen separation unit, especially a pressure swing adsorption unit. Meanwhile, the concentration of inert gas in the mixed stream supplied to the hydrogen separation unit is determined regularly or continuously. As long as the concentration of inert gas is above a predetermined upper limit of inert gas in the mixed stream, the mixed stream continues to be fed to the hydrogen separation unit. As soon as the concentration of inert gas in the mixed stream reaches or falls below a predefined upper limit value, the decision is made to no longer feed the mixed stream to the hydrogen separation unit. From this point on, the hydrogen-containing stream, which is now low in inert gas, is bypassed the hydrogen separation unit and fed directly into a hydrogen pipeline, for example.

### List of reference signs

- 10: electrolysis system
- 11: uncompressed mixed stream comprising hydrogen and inert gas
- 12: compression unit
- 13: compressed mixed stream comprising hydrogen and inert gas
- 14: purification unit
- 15: high purity hydrogen product
- 16: online analyser
- 17: sampling point
- 18a, 18b: control valve
- 19: pressure swing adsorption unit
- 20: steam methane reforming unit
- 21: off-gas treatment
- 22: hydrogen rich stream
- 23: purified compressed mixed stream comprising hydrogen and inert gas
- 24: purified compressed mixed stream with high inert gas concentration
- 25: purified compressed mixed stream with low inert gas concentration
- 26: high purity hydrogen stream
- 27: off-gas stream

## Claims

1. Method for the start-up of an electrolysis system, wherein the electrolysis system is configured to produce hydrogen at the cathode side of the electrolysis system from a water containing electrolysis medium, comprising the method steps of
a) purging at least a part of the electrolysis system with an inert gas stream whilst the electrolysis system is in standby mode;
b) displacement of the inert gas from the cathode side of the electrolysis system by means of a hydrogen stream during the start-up of the electrolysis system, whereby said hydrogen stream is produced on the cathode side of the electrolysis system;
c) supplying a mixed stream comprising hydrogen and inert gas obtained in step b) to a hydrogen separation unit until a predetermined upper concentration limit of inert gas in the mixed stream comprising hydrogen and inert gas supplied to the hydrogen separation unit is reached;
d) withdrawing a hydrogen stream low in inert gas from the electrolysis system by bypassing the hydrogen separation unit after the predetermined upper concentration limit according to step c) has been reached.

2. Method according to claim 1, wherein the hydrogen separation unit is supplied with a hydrogen rich stream, wherein said hydrogen rich stream is produced by a hydrogen production unit which is not an electrolysis system.

3. Method according to claim 2, wherein the hydrogen production unit which is not an electrolysis system and the electrolysis system are located in a joint plant network.

4. Method according to any one of the preceding claims, wherein the hydrogen separation unit is selected from at least one element of the group of
- a pressure swing adsorption (PSA) unit,
- a thermal swing adsorption (TSA) unit,
- a membrane unit,
- an electrochemical pump.

5. Method according to one of claims 2 to 4, wherein the hydrogen separation unit produces a high purity hydrogen stream and an off-gas stream by separation of hydrogen from
- the mixed stream comprising hydrogen and inert gas supplied by the electrolysis system, and
- the hydrogen rich stream supplied by the hydrogen production unit which is not an electrolysis system.

6. Method according to any one of the preceding claims, wherein the mixed stream comprising hydrogen and inert gas is supplied to a purification unit to remove oxygen and optionally water from said mixed stream, whereby a purified mixed stream comprising hydrogen and inert gas is obtained, and said purified mixed stream is subsequently supplied to the hydrogen separation unit.

7. Method according to claim 6, wherein an off-gas stream from the purification unit is combined with an off-gas stream from the hydrogen separation unit according to claim 5.

8. Method according to claim 6 or 7, wherein the concentration of inert gas in the mixed stream comprising hydrogen and inert gas is determined by an online-analyser, whereby the sampling point of the online analyser is located downstream of the purification unit and upstream of the hydrogen separation unit.

9. Method according to any one of the preceding claims, wherein the electrolysis system is part of an electrolysis plant comprising at least three electrolysis systems, and wherein, in a condition in which the electrolysis plant is not operating at its maximum specified capacity, a first and a second of the electrolysis systems are operated in standby mode, and a third of the electrolysis systems is operated at a capacity which, expressed as a percentage of the maximum nominal capacity of the third electrolysis system, is at least equal to the lower safety limit of the third electrolysis system.

10. Method according to any one of the preceding claims, wherein the electrolysis system is part of an electrolysis plant comprising a further electrolysis system, wherein the further electrolysis system provides a hydrogen stream, and said hydrogen stream is admixed to the mixed stream comprising hydrogen and inert gas, whereby a hydrogen rich mixed stream is obtained, and the hydrogen rich mixed stream is supplied to the hydrogen separation unit until a predetermined upper concentration limit of inert gas in the hydrogen rich mixed stream is reached.

11. Plant, configured for carrying out the method according to any one of the preceding claims.
